# EUROPEAN PATENT SPECIFICATION

(11) **EP 4 600 150 B1**
(45) Date of publication and mention of the grant of the patent: **07.10.2026**
(21) Application number: 24156364.2
(22) Date of filing: 07.02.2024
(51) Int. Cl.: B64D 11/06

(54) **FOLDABLE CABIN ATTENDANT SEAT ALONG REARWARD CONTOUR OF PASSENGER SEAT**
KLAPPBARER FLUGBEGLEITERSITZ ENTLANG DER HINTEREN KONTUR EINES PASSAGIERSITZES
SIÈGE PLIABLE POUR PERSONNEL DE CABINE LE LONG DU CONTOUR ARRIÈRE DU SIÈGE DE PASSAGER

(43) Date of publication of application: 13.08.2025
(73) Proprietor: Airbus Operations GmbH, 21129 Hamburg (DE)
(72) Inventor: Hegenbart, Matthias, Hamburg (DE); Benthien, Hermann, Hamburg (DE); Roth, Ingo, Hamburg (DE)

(56) References cited:
- EP-A1- 2 803 576
- EP-B1- 3 368 417
- WO-A1-2020/076369
- DE-A1- 102014 225 250
- US-B2- 8 297 554

## Description

### Foldable cabin attendant seat along rearward contour of passenger seat

The present disclosure generally relates to an aircraft section and an aircraft comprising a passenger seat and a cabin attendant seat arranged on a backside of the passenger seat. Particularly, the present disclosure relates to an aircraft section and an aircraft having a cabin attendant seat arranged at a backside of a passenger seat, wherein a shape of the cabin attendant seat follows a rearward contour of a backrest of the passenger seat.

A conventional aircraft comprises at least one aircraft section including a cabin attendant seat. On the one hand, a flight attendant is required to be in the vicinity of an aircraft door, for example, for evacuation incidents. Thus, a corresponding cabin attendant seat is to be installed next to the aircraft door. On the other hand, such seats are only used during certain periods of a flight, particularly during take-off and landing.

For example, the back door of the aircraft is usually adjacent to the last seat row, and an emergency door (overwing door) is provided next to an intermediate seat row. Therefore, one or more passenger seats of the last seat row and intermediate seat row is omitted, in order to install the cabin attendant seat. As a mere example, the aircraft usually has a longitudinally arranged aisle, and a passenger seat adjacent to such longitudinal aisle is omitted and a cabin attendant seat is installed instead. Moreover, a conventional cabin attendant seat includes components, such as a stowage compartment for emergency equipment, a telephone or the like. Thus, a footprint of the cabin attendant seat (i.e., the area required on the cabin floor, when a cabin attendant uses the seat) is regularly larger than of a regular passenger seat. For instance, a spacing (in longitudinal direction of the aircraft) between two adjacent seat rows, one of which includes the cabin attendant seat, is larger than between regular passenger seat rows.

However, omitting a passenger seat for installing a cabin attendant seat or increasing the spacing between seat rows means that the totals number of passenger seats in the aircraft is reduced. This reduces the revenue of the aircraft operator, such as an airline, and hence decreases the profit achievable with the aircraft.

EP 3 368 417 B1 discloses an assembly installed in an aircraft cabin, the assembly comprising a passenger seat and a seat for a cabin crew member. The cabin crew seat comprises a backrest and a seat mounted to pivot relative to the back seat. The passenger seat includes a transverse beam forming a structural element, to which two uprights of a seat structure of the cabin crew seat are mounted.

It is therefore an object of the present disclosure to provide an aircraft section allowing installation of a cabin attendant seat in a more space-saving manner.

This object is solved by the present invention as defined in the independent claims. Preferred embodiments are defined by the dependent claims.

According to a first aspect to better understand the present disclosure, an aircraft section, comprises a cabin floor section, and a passenger seat mounted on the cabin floor section, wherein the passenger seat has a backrest with a backside having a rearward contour. Furthermore, the aircraft section comprises a cabin attendant seat arranged at the backside of the backrest of the passenger seat and having a shape following the rearward contour of the backrest of the passenger seat.

This allows maintaining a passenger seat in the aircraft section dedicated to have a cabin attendant seat installed therein. Thus, the number of passenger seats is increased, as the installation of the cabin attendant seat does not require omission of a passenger seat.

The cabin attendant seat following the rearward contour of the passenger seat (specifically the rearward contour of the backrest of the passenger seat) allows significantly reducing the area required by the cabin attendant seat, particularly its footprint area. The cabin attendant seat can be considered as being arranged like a "backpack" at the passenger seat, thereby reducing the overall footprint area required by both seats.

The rearward contour is considered as a three-dimensional shape of the rearward facing surface (rear surface) of the back rest of the passenger seat. For instance, when viewing in a transverse direction of the aircraft (orthogonal to a longitudinal direction of the aircraft and in the direction a regular seat rail is installed in the aircraft), the cross-section of the rear surface forms at least a portion of the rearward contour.

In an implementation variant, the cabin attendant seat can comprise a support frame having a shape following the rearward contour of the backrest of the passenger seat. The support frame can be configured to hold and/or allow mounting of at least a portion of the cabin attendant seat thereto.

In another implementation variant, the cabin attendant seat can comprise a backrest and a foldable seat. The foldable seat can be configured to be moved from a folded or stowed position to an open or use position. In the open or use position the foldable seat is arranged in a way that a person can easily sit thereon. For instance, a seat cushion can be arranged on the foldable seat which pivots downwards when the foldable seat moves to the open or use position. As a mere example, the seat cushion can be pivotally mounted to the support frame.

Furthermore, the backrest of the cabin attendant seat can be mounted to the support frame in a fixed or movable manner. Depending on the contour of the backside of the backrest of the passenger seat, a fixed backrest can be employed, as it may still allow comfortable sitting of a cabin attendant on the cabin attendant seat. As a mere example, the rearward contour of the backrest of the passenger seat can run along a path having an angle to a vertical line, wherein the top of the backrest of the passenger seat is located more to the rear of the aircraft (when the passenger seat is installed in the aircraft) than a bottom portion of the backrest. Thus, the backrest of the cabin attendant seat can have a corresponding arrangement relative to the vertical line, which, depending on the angle to the vertical line, may form a shape allowing comfortable receiving a buttocks of a person sitting on the foldable seat.

In yet another implementation variant, the backrest ca be configured to move between a stowed position and a use position, wherein at least a portion of the backrest in the stowed position is closer to the backside of the backrest of the passenger seat than in the use position. For instance, when the foldable seat moves to its open or use position, the backrest of the cabin attendant seat can move together towards its use position, and vice versa. Furthermore, the foldable seat in the stowed position can be closer to the backrest of the passenger seat, as is the backrest, so that both are still away in a space-saving manner at the lower portion of the backrest of the passenger seat.

In an implementation variant, which is not claimed, the cabin attendant seat can be mounted to the passenger seat. As a mere example, the cabin attendant seat can be mounted to the backrest of the passenger seat. For instance, the support frame of the cabin attendant seat can be mounted to the back rest of the passenger seat and/or any other component of the passenger seat. Thus, the cabin attendant seat is statically mounted to the cabin floor they are the passenger seat. Therefore, no additional foot of the cabin attendant seat is required.

In accordance with claim 1, the cabin attendant seat further comprises a base frame configured to carry the cabin attendant seat. The base frame is mounted on the cabin floor section in an area overlapping with a footprint of the passenger seat. Thus, the base frame is installed in an area of the cabin floor covered by a passenger seat and/or a (supporting) component of the passenger seat.

Due to this overlap of the footprint of the passenger seat and the footprint of the base frame, no additional space is required for installing the cabin attendant seat.

In yet another implementation variant, the base frame can be configured to be installed to a seat rail provided in the cabin floor.

In an implementation variant, the aircraft section can comprise a plurality of passenger seats and a plurality of cabin attendant seats, wherein each of the plurality of cabin attendant seats is arranged at a backside of the backrest of one of the plurality of passenger seats.

As a mere example, the number of passenger seats in the aircraft section can be equal to the number of cabin attendant seats in the same aircraft section. Thus, each passenger seat is equipped with a cabin attendant seat. Alternatively, the number of cabin attendant seats in the aircraft section is smaller than the number of passenger seats in the same aircraft section.

It is to be understood that the present disclosure is not restricted by the number of cabin attendant seats and/or by a ratio between the number of cabin attendant seats and number of passenger seats in the aircraft section.

According to a second aspect to better understand the present disclosure, an aircraft comprises at least one aircraft section of the first aspect or one or more of its variants.

In an implementation variant, the aircraft can further comprise a door configured to allow people to enter and leave the aircraft, and a door aisle arranged adjacent to the door and connecting the door with a centre of the aircraft. The backside of the backrest of the passenger seat can be arranged adjacent to the door aisle and the cabin attendant seat faces the door aisle. In other words, the seat row delimiting one side of the door aisle, particularly the front side of the door aisle, is used to install one or more cabin attendant seats, so that a flight attendant, when sitting thereon, occupies only space in the door aisle.

The present disclosure is not restricted to the aspects and variants in the described form and order. Specifically, the description of aspects and variants is not to be understood as a specific limiting grouping of features. It is to be understood that the present disclosure also covers combinations of the aspects and variants.

In the following, the present disclosure will further be described with reference to exemplary implementations illustrated in the figures, in which:
- Figure 1: schematically illustrates side views of a conventional passenger seat and a conventional cabin attendant seat;
- Figure 2: schematically illustrates a side view of an aircraft section having a passenger seat and a cabin attendant seat, according to the present disclosure;
- Figures 3 and 4: schematically illustrate side views of a foldable cabin attendant seat in different positions with an without a passenger seat, respectively;
- Figure 5: schematically illustrates a perspective view of a frame structure of the cabin attendant seat in different folding positions;
- Figure 6: schematically illustrates a rear view of a seat row having a plurality of cabin attendant seats; and
- Figure 7: schematically illustrates an aircraft comprising aircraft sections with passenger seats and cabin attendant seats.

In the following description, for purposes of explanation and not limitation, specific details are set forth in order to provide a thorough understanding of the present disclosure. It will be apparent to one skilled in the art that the present disclosure may be practiced in other implementations that depart from these specific details.

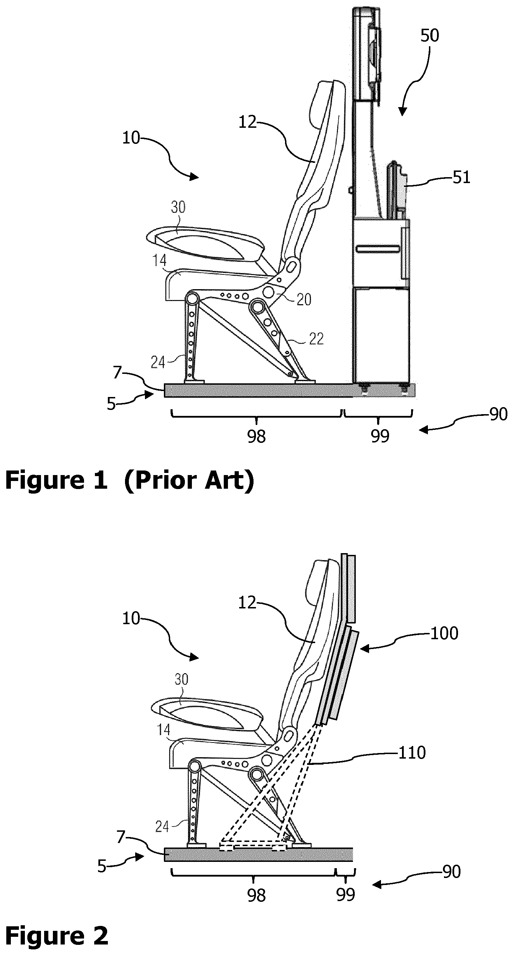

Figure 1 schematically illustrates side views of a conventional passenger seat 10 and a conventional cabin attendant seat 50. The passenger seat 10 and the conventional cabin attendant seat 50 are illustrated as being arranged one behind the other in a longitudinal direction of the aircraft. This is for illustrative purposes only, in order to better illustrate a footprint area 98 of the passenger seat 10 on a cabin floor 5 and a footprint area 99 of the conventional cabin attendant seat 50 in a folded state. Usually, the passenger seat 10 is omitted and the conventional cabin attendant seat 50 is installed instead. For instance, the front side of the conventional cabin attendant seat 50 can be arranged where the front foot 24 of the passenger seat 10 or a front edge of a seat cushion 14 of the passenger seat 10 or a front edge of an armrest 30 of the passenger seat 10 is/are usually arranged. This allows a flight attendant to fold down a seat cushion 51 of the conventional cabin attendant seat 50 and sit in a space (footprint area 98) otherwise occupied by the passenger seat 10.

As can be derived from Figure 1, the area of an aircraft section 90 required for such conventional cabin attendant seat 50 regularly takes up more space in the aircraft than the passenger seat 10 alone. As a mere example, as illustrated in Figure 1, in a longitudinal direction of the aircraft, the footprint area required for the cabin attendant seat 50 is approximately the sum of the lengths of the illustrated footprint areas 98 and 99.

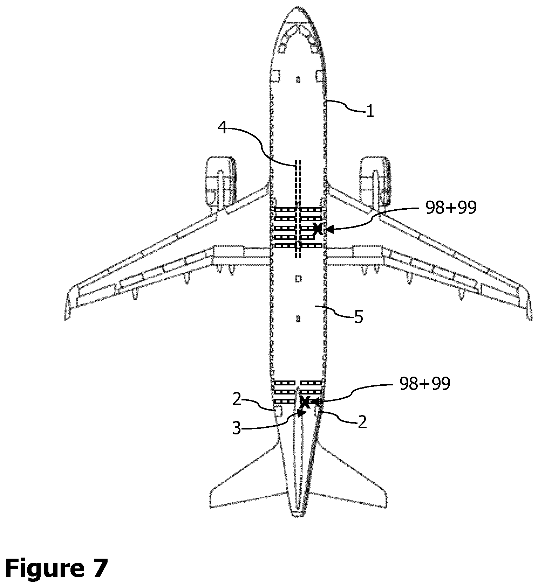

Figure 2 schematically illustrates a side view of an aircraft section 90 having a passenger seat 10 and a cabin attendant seat 100, according to the present disclosure. The passenger seat 10 can be a conventional passenger seat 10, which is mounted on a cabin floor section 5, for example, in one or more seat rails 7 provided in the cabin floor 5. Since the cabin floor 5 extends further to the front and rear of the aircraft 1 (Figure 7), the illustrated portion of the cabin floor 5 can be a cabin floor section 5, so that both terms are interchangeable in the present disclosure.

The passenger seat 10 has a backrest 12 with a backside having a rear contour. For example, for a comfortable sitting posture of the passenger, the backrest 12 is arranged at an angle with respect to a vertical line, so that the top portion of the backrest 12 is arranged further to the rear (of the passenger seat 10 as well as of the aircraft 1) than a lower portion of the backrest 12.

A cabin attendant seat 100 is arranged at the backside of the backrest 12 of the passenger seat 10. The cabin attendant seat 100 is illustrated by solid lines and a grey pattern, in order to highlight the cabin attendant seat 100. The shape of the cabin attendant seat 100 follows the rearward contour of the backrest 12 of the passenger seat 10. In other words, the cabin attendant seat 100 is formed to fit to the rear side or rear surface of the backrest 12 of the passenger seat 10. As a mere example, as illustrated in Figure 2, a top portion of the cabin attendant seat 100 is further to the rear than a lower portion of the cabin attendant seat 100.

Albeit not claimed, the cabin attendant seat 100 can be mounted to the passenger seat 10. For example, the cabin attendant seat 100 can be mounted to the backrest 12 of the passenger seat 10. Alternatively or additionally (and with further reference to Figure 1), the cabin attendant seat 100 can be mounted to any portion of a base of the passenger seat 10. For instance, the passenger seat 10 can have a front foot 24 and a rear foot 22 as well as a seat holding structure 20, which together form the base of the passenger seat 10. As a mere example, the cabin attendant seat 100 can be mounted to the seat holding structure 20 and/or the rear foot 22.

According to claim 1, the cabin attendant seat 100 comprises a base frame 110. This feature is schematically illustrate in dashed lines in Figure 2. Such base frame 110 is configured to carry the cabin attendant seat 100.

Furthermore, albeit not claimed, the base frame 110 can be mounted to the base of the passenger seat 10, such as the seat holding structure 20 and/or the front foot 24 and/or the rear foot 22. In accordance with claim 1 the base frame 110 is mounted to the cabin floor 5, such as one or more seat rails 7 provided in the cabin floor 5. The mounting positions of the base frame 110 on the cabin floor can be in an area 98 corresponding to a footprint of the passenger seat 10. In other words, the lower and/or mounting portion of the base frame 110 is arranged underneath the passenger seat 10. As a mere example (and with further reference to Figure 1), the passenger seat 10 can have a front foot 24 and a rear foot 22 as well as a seat holding structure 20, which together form a base of the passenger seat 10. The base frame 110 of the cabin attendant seat 100 can be mounted to the cabin floor 5 in an area between the front foot 24 and the rear foot 22, so that the base frame 110 can be mounted to the same seat rail(s) 7 as the passenger seat 10, while the base frame 110 extends rearwardly towards a lower portion of the backrest 12 of the passenger seat 10 as illustrated in Figure 2.

Thus, the base frame 110 does not require additional space compared to the passenger seat 10, so that the combination of passenger seat 10 and cabin attendant seat 100 is very space-saving. This is illustrated exemplarily in Figure 2 by the footprint areas 98 and 99 of the passenger seat 10 and the cabin attendant seat 100, respectively. When comparing the combined areas 98, 99 with those of Figure 1 illustrated for a conventional arrangement of seats 10, 50, it is immediately apparent that providing a cabin attendant seat 100 in addition to a passenger seat 10 can be very space-saving in the entire aircraft section 90. Thus, even when supplementing a cabin attendant seat 100 to one or more seats of intermediate seat rows, the longitudinal size of the footprint 98, 99 is less than in conventional cases, so that eventually an additional seat rail can be provided in the aircraft. Moreover, instead of replacing a passenger seat 10 with a conventional cabin attendant seat 50, both seats can be provided in the aircraft section 90, so that one more passenger seat is available in the aircraft 1.

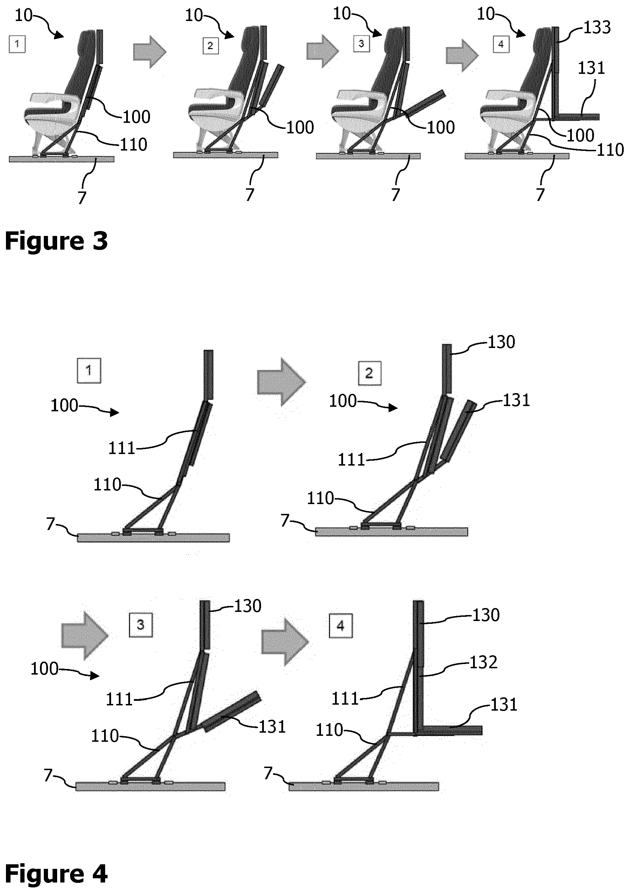

Turning to Figures 3 and 4, the cabin attendant seat 100 can comprise a backrest 132 and a headrest 133. It is to be understood that a reference to the backrest 132 in the present disclosure can include a single backrest 132 including a headrest (such as a backrest/headrest unit), but can also mean a cabin attendant seat 100 having a distinct backrest 132 and distinct headrest 133. Furthermore, the cabin attendant seat 100 can comprise a foldable seat 131 that can be moved from a stowed position to use position.

Figures 3 and 4 schematically illustrates side views in different stages of the cabin attendant seat 100. From illustration "1" to "4" the foldable seat 131 is moved from the stowed position (illustration 1) to the use position (illustration 4), where it is completely folded down. Thus, the cabin attendant seat 100 can be stowed in a space saving manner when not in use.

Figures 3 and 4 schematically illustrate a further optional feature, i.e., the backrest 132 being configured to move between a stowed position and a use position. As can be derived from these drawings, in the stowed position (illustration 1) at least a portion of the backrest 132 is closer to the backside of the backrest 12 of the passenger seat 10 than in the use position (illustration 4).

As a mere example, the cabin attendant seat 100 can comprise a support frame 111 having a shape following the rearward contour of the backrest 12 of the passenger seat 10. While at least a portion of the support frame 111 maintains this shape, further elements of the support frame 111 and/or elements of the backrest 132 and/or elements of the foldable seat 131 are configured to move to a position further away from the backrest 12 of the passenger seat 10 when moving to the use position. Thus, the backrest 132 can be stowed in a very space-saving manner, as is the foldable seat 131.

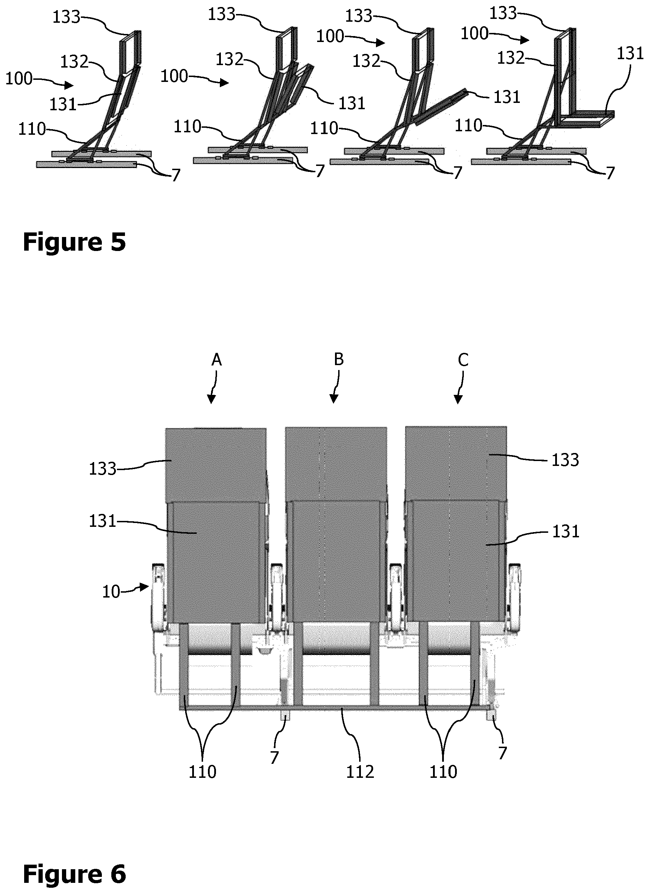

Figure 5 schematically illustrates a perspective view of a frame structure 110, 111 of the cabin attendant seat 100 in different folding positions, corresponding to the folding positions "1" to "4" of Figures 3 and 4. As can be further derived from Figure 5, the cabin attendant seat 100 is mounted to a pair of seat rails 7, which is usually arranged in a cabin floor 5 (not illustrated in Figure 5).

Figure 6 schematically illustrates a rear view of a seat row having a plurality of cabin attendant seats 100. Specifically, three passenger seats 10 are provided to form a seat row. One or more of these passenger seats 10 can be used to install an associated cabin attendant seat 100. In other words, one cabin attendant seat 100 can be provided at each of the optional positions "A", "B", "C", which correspond to the positions of the passenger seats 10.

While Figure 6 illustrates three cabin attendant seats 100, it is to be understood that any number of cabin attendant seats 100 from 1 to N (N being the total number of passenger seats 10 in the seat row) can be provided.

Figure 6 further illustrates that the entire seat row and any number of cabin attendant seats 100 can be mounted to a pair of seat rails 7. As a mere example, the base frame 110 of the cabin attendant seat 100 can likewise be equipped with one or more horizontal bars 112, which is/are mounted to the seat rails 7. The remaining portion of the base frame 110 is then installed/mounted on such horizontal bar(s) 112.

Figure 7 schematically illustrates an aircraft 1 comprising at least one aircraft section 90 with passenger seats 10 and cabin attendant seats 100.

The aircraft 1 comprises at least one door 2 configured to allow people to enter and leave the aircraft, and a door aisle 3 arranged adjacent to the door 2 and connecting the door with a centre aisle 4 of the aircraft 1 (only a portion of the centre aisle 4 is illustrated in dashed lines for brevity reasons). For instance, in Figure 7 two seat rows are arranged on each lateral side of a longitudinally arranged centre aisle 4, each seat row having three seats. Each of the seats has a footprint area 98 on the cabin floor 5. Figure 7 schematically illustrates by a "X"-mark that at least some of the footprint areas 98, particularly the passenger seat 10 installed in this area 98, can be supplemented with a cabin attendant seat 100 forming together a footprint area 98+99, as illustrated in more detail in the site view of Figure 2.

In the over wing seat row (to the top in Figure 7) the supplementation of cabin attendant seat 100 may require omitting one of the passenger seats 10 in the row behind the cabin attendant seat 100 as illustrated in Figure 7. This is due to the space required by the flight attendant sitting on the cabin attendant seat 100. Nevertheless, as described with respect to Figure 2, the space required for the cabin attendant seat 100 in a longitudinal direction of the aircraft is much smaller than this conventional cabin attendant seats 50.

In the lower portion of Figure 7 the cabin attendant seat 100 is supplemented to a passenger seat 10 at an aircraft section 90 (98+ 99) delimiting the door aisle 3. Here, the passenger seat 10 can be maintained, while a flight attendant sitting on the cabin attendant seat 100 is located in the door aisle 3, which is regularly not used at times when a flight attendant sits on the cabin attendant seat 100. Thus, the number of passenger seats 10 in the aircraft can be increased.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft section (90), comprising:
a cabin floor section (5);
a passenger seat (10) mounted on the cabin floor section, wherein the passenger seat has a backrest (12) with a backside having a rearward contour; and
a cabin attendant seat (100) arranged at the backside of the backrest (12) of the passenger seat and having a shape following the rearward contour of the backrest (12) of the passenger seat,
wherein the cabin attendant seat (100) further comprises a base frame (110) configured to carry the cabin attendant seat (100), and wherein the base frame (110) is mounted on the cabin floor section (5) in an area (98) overlapping with a footprint of the passenger seat (10).

2. The aircraft section (90) of claim 1, wherein the cabin attendant seat (100) comprises a support frame (111) having a shape following the rearward contour of the backrest (12) of the passenger seat (10).

3. The aircraft section (90) of claim 1 or 2, wherein the cabin attendant seat (100) comprises a backrest (132) and a foldable seat (131).

4. The aircraft section (90) of claim 3, wherein the backrest (132) is configured to move between a stowed position, when the foldable seat (131) is in a stowed position, and a use position, when the foldable seat (131) is in a use position, wherein at least a portion of the backrest (132) in the stowed position is closer to the backside of the backrest (12) of the passenger seat (10) than in the use position.

5. The aircraft section (90) of one of claims 1 to 4, wherein the passenger seat (2) has a front foot (24) and a rear foot (22), and wherein the base frame (110) of the cabin attendant seat (100) is mounted to the cabin floor section (5) in an area between the front foot (24) and the rear foot (22).

6. The aircraft section (90) of claim 5, wherein the base frame (110) is mounted to a same seat rail (7) as the passenger seat (10).

7. The aircraft section (90) of one of claims 1 to 6, wherein the aircraft section (90) comprises a plurality of passenger seats (10) and a plurality of cabin attendant seats (100), wherein each of the plurality of cabin attendant seats (100) is arranged at a backside of the backrest (12) of one of the plurality of passenger seats (10).

8. An aircraft (1), comprising:
at least one aircraft section (90) of one of claims 1 to 7.

9. The aircraft (1) of claim 8, further comprising:
a door (2) configured to allow people to enter and leave the aircraft; and
a door aisle (3) arranged adjacent to the door (2) and connecting the door with a centre of the aircraft,
wherein the backside of the backrest (12) of the passenger seat (10) is arranged adjacent to the door aisle (3) and the cabin attendant seat (100) faces the door aisle (3).

## Patentansprüche

1. Flugzeugabschnitt (90), der Folgendes umfasst:
einen Kabinenbodenabschnitt (5);
einen Passagiersitz (10), der an dem Kabinenbodenabschnitt montiert ist, wobei der Passagiersitz eine Rückenlehne (12) mit einer Rückseite aufweist, die eine hintere Kontur aufweist; und
einen Kabinenbegleitersitz (100), der an der Rückseite der Rückenlehne (12) des Passagiersitzes angeordnet ist und eine Form aufweist, die der hinteren Kontur der Rückenlehne (12) des Passagiersitzes folgt,
wobei der Kabinenbegleitersitz (100) ferner einen Grundrahmen (110) umfasst, der dazu ausgelegt ist, den Kabinenbegleitersitz (100) zu tragen, und wobei der Grundrahmen (110) an dem Kabinenbodenabschnitt (5) in einem Bereich (98) montiert ist, der sich mit einer Grundfläche des Passagiersitzes (10) überlappt.

2. Flugzeugabschnitt (90) nach Anspruch 1, wobei der Kabinenbegleitersitz (100) einen Stützrahmen (111) mit einer Form umfasst, die der hinteren Kontur der Rückenlehne (12) des Passagiersitzes (10) folgt.

3. Flugzeugabschnitt (90) nach Anspruch 1 oder 2, wobei der Kabinenbegleitersitz (100) eine Rückenlehne (132) und einen faltbaren Sitz (131) umfasst.

4. Flugzeugabschnitt (90) nach Anspruch 3, wobei die Rückenlehne (132) dazu ausgelegt ist, sich zwischen einer verstauten Position, in der sich der faltbare Sitz (131) in einer verstauten Position befindet, und einer Gebrauchsposition zu bewegen, in der sich der faltbare Sitz (131) in einer Gebrauchsposition befindet, wobei mindestens ein Anteil der Rückenlehne (132) in der verstauten Position näher an der Rückseite der Rückenlehne (12) des Passagiersitzes (10) ist als in der Gebrauchsposition.

5. Flugzeugabschnitt (90) nach einem der Ansprüche 1 bis 4, wobei der Passagiersitz (2) einen Vorderfuß (24) und einen Hinterfuß (22) aufweist, und wobei der Grundrahmen (110) des Kabinenbegleitersitzes (100) an dem Kabinenbodenabschnitt (5) in einem Bereich zwischen dem vorderen Fuß (24) und dem hinteren Fuß (22) montiert ist.

6. Flugzeugabschnitt (90) nach Anspruch 5, wobei der Grundrahmen (110) an der gleichen Sitzschiene (7) wie der Passagiersitz (10) montiert ist.

7. Flugzeugabschnitt (90) nach einem der Ansprüche 1 bis 6, wobei der Flugzeugabschnitt (90) eine Vielzahl von Passagiersitzen (10) und eine Vielzahl von Kabinenbegleitersitzen (100) umfasst, wobei jeder der Vielzahl von Kabinenbegleitersitzen (100) an einer Rückseite der Rückenlehne (12) eines der Vielzahl von Passagiersitzen (10) angeordnet ist.

8. Flugzeug (1), umfassend:
mindestens einen Flugzeugabschnitt (90) nach einem der Ansprüche 1 bis 7.

9. Flugzeug (1) nach Anspruch 8, ferner umfassend:
eine Tür (2), die so ausgelegt ist, dass Personen das Flugzeug betreten und verlassen können; und
einen Türgang (3), der angrenzend an die Tür (2) angeordnet ist und die Tür mit einer Mitte des Flugzeugs verbindet,
wobei die Rückseite der Rückenlehne (12) des Passagiersitzes (10) angrenzend an den Türgang (3) angeordnet ist und der Kabinenbegleitersitz (100) dem Türgang (3) zugewandt ist.

## Revendications

1. Section d'aéronef (90), comprenant :
une section de plancher de cabine (5) ;
un siège passager (10) monté sur la section de plancher de cabine, le siège passager ayant un dossier (12) présentant un côté envers ayant un contour arrière ; et
un siège de personnel de cabine (100) disposé au niveau du côté envers du dossier (12) du siège passager et ayant une forme qui suit le contour arrière du dossier (12) du siège passager,
dans laquelle le siège de personnel de cabine (100) comprend en outre un châssis de base (110) conçu pour porter le siège de personnel de cabine (100) et dans laquelle le châssis de base (110) est monté sur la section de plancher de cabine (5) dans une zone (98) chevauchant un encombrement au sol du siège passager (10).

2. Section d'aéronef (90) selon la revendication 1, dans laquelle le siège de personnel de cabine (100) comprend un châssis de support (111) ayant une forme qui suit le contour arrière du dossier (12) du siège passager (10).

3. Section d'aéronef (90) selon la revendication 1 ou 2, dans laquelle le siège de personnel de cabine (100) comprend un dossier (132) et un siège pliable (131).

4. Section d'aéronef (90) selon la revendication 3, dans laquelle le dossier (132) est conçu pour passer d'une position escamotée, lorsque le siège pliable (131) est dans une position escamotée, à une position d'utilisation, lorsque le siège pliable (131) est dans une position d'utilisation, et inversement, dans laquelle au moins une partie du dossier (132) dans la position escamotée est plus proche du dossier (12) du siège passager (10) que dans la position d'utilisation.

5. Section d'aéronef (90) selon l'une des revendications 1 à 4, dans laquelle le siège passager (2) a un pied avant (24) et un pied arrière (22) et dans laquelle le châssis de base (110) du siège de personnel de cabine (100) est monté sur la section de plancher de cabine (5) dans une zone entre le pied avant (24) et le pied arrière (22).

6. Section d'aéronef (90) selon la revendication 5, dans laquelle le châssis de base (110) est monté sur un même rail de siège (7) que le siège passager (10).

7. Section d'aéronef (90) selon l'une des revendications 1 à 6, la section d'aéronef (90) comprenant une pluralité de sièges passagers (10) et une pluralité de sièges de personnel de cabine (100), dans laquelle chacun de la pluralité de sièges de personnel de cabine (100) est disposé au niveau d'un côté envers du dossier (12) de l'un de la pluralité de sièges passagers (10).

8. Aéronef (1), comprenant :
au moins une section d'aéronef (90) selon l'une des revendications 1 à 7.

9. Aéronef (1) selon la revendication 8, comprenant en outre :
une porte (2) conçue pour permettre à des personnes d'entrer dans l'aéronef et d'en sortir ; et
une allée de porte (3) disposée de manière adjacente à la porte (2) et reliant la porte avec un centre de l'aéronef,
dans lequel le côté envers du dossier (12) du siège passager (10) est disposé de manière adjacente à l'allée de porte (3) et le siège de personnel de cabine (100) fait face à l'allée de porte (3).
